# EUROPÄISCHE PATENTANMELDUNG

(11) **EP 1 813 499 A2**
(43) Veröffentlichungstag der Anmeldung: **01.08.2007**
(21) Anmeldenummer: 06127259.7
(22) Anmeldetag: 28.12.2006
(51) Int. Cl.: B61L 3/12

(54) **System, insbesondere Bahnsystem, mit sich entlang einer Fahrstrecke bewegenden Fahrzeugen und Verfahren zur sicheren Steuerung der Fahrzeuge**

(30) Priorität: 23.01.2006 DE 102006004799
(71) Anmelder: SIEMENS AKTIENGESELLSCHAFT, 80333 München (DE)
(72) Erfinder: Kaluscha, Uwe, 38350 Helmstedt (DE); Rosenkranz, Uwe, 38104 Braunschweig (DE)

(57) **Zusammenfassung**

Die Erfindung betrifft ein System, insbesondere Bahnsystem, und ein Verfahren zur sicheren Steuerung von Fahrzeugen des Systems, die sich entlang einer Fahrstrecke bewegen, an der wegseitige Sendeeinrichtungen (1), insbesondere in Form von Balisen, fest angeordnet sind, welche an die Fahrzeuge jeweils abhängig von einem Signalbegriff (SB) Datensätze in Form von Telegrammen (T) übertragen, die wiederum Nutzdaten und einen Anhang zur Codesicherung umfassen, bei dem die Sendeeinrichtung (1) das entsprechende Telegramm (T) jeweils beim Passieren eines Fahrzeugs an dieses Fahrzeug überträgt, welches die Integrität des übertragenen Telegramms (T) anhand des Anhangs zur Codesicherung überprüft und coderichtige Telegramme (T) akzeptiert und bei codefalschen Telegrammen (T) eine entsprechende sicherungstechnische Reaktion ausführt. Um eine kostengünstigere sichere Steuerung der Fahrzeuge zu erzielen, wird vorgeschlagen, dass das Telegramm (T) von der Sendeeinrichtung (1) aus mindestens zwei unabhängigen Telegrammteilen (TT1, TT2) zusammengesetzt wird, die dazu für jeden Signalbegriff (SB) in der Sendeeinrichtung (1) vorgehalten werden.

## Beschreibung

Die Erfindung betrifft ein System, insbesondere Bahnsystem, mit sich entlang einer Fahrstrecke bewegenden Fahrzeugen und ein Verfahren zur sicheren Steuerung der Fahrzeuge gemäß den Oberbegriffen der Ansprüche 1 und 11.

Verfahren zur sicheren Steuerung von Fahrzeugen eines Bahnsystems, die sich entlang einer Fahrstrecke bewegen, sind bekannt. Abhängig von Signalbegriffen werden dabei von wegseitigen Balisen (Sendeeinrichtungen) der Streckeneinrichtungen Telegramme an die Fahrzeuge jeweils beim Passieren eines Fahrzeugs übertragen. Die Fahrzeuge verfügen dazu über entsprechende Fahrzeugeinrichtungen. Neben Nutzdaten enthalten die Datensätze der Telegramme einen Anhang zur Codesicherung. Die Integrität der ausgesendeten Telegramme wird dadurch sichergestellt, dass jedes Datentelegramm in einem sicherungstechnisch aufgebauten streckenseitigen Rechner generiert, codegesichert und transparent über die Balise übertragen wird. Im streckenseitigen Rechner ist jeweils dafür zu sorgen, dass der Dateninhalt der Telegramme zum jeweiligen (anliegenden) Signalbegriff passt und nicht verfälscht ist. Anhand des Anhangs zur Codesicherung wird die Integrität des empfangenden Telegramms im Fahrzeug überprüft. Nachteilig ist dabei, dass die streckenseitigen Rechner das kostenintensivste Element der Streckeneinrichtung sind und eine externe Energiezufuhr benötigen.

Die Aufgabe der Erfindung ist es, ein System und ein für das System geeignetes Verfahren zur sicheren Steuerung von Fahrzeugen vorzuschlagen, das kostengünstiger ist und ggf. auch ohne externe Energiezufuhr auskommt.

Die Lösung der Erfindung ist bezogen auf das System durch die Merkmale des Anspruchs 1 und bezogen auf das Verfahren durch die Merkmale des Anspruchs 11 gegeben; die Unteransprüche betreffen vorteilhafte Ausgestaltungen.

Die Lösung sieht bezogen auf das System als auch auf das Verfahren vor, dass das Telegramm von der Sendeeinrichtung aus mindestens zwei unabhängigen Telegrammteilen zusammengesetzt wird, die dazu für jeden Signalbegriff in der Sendeeinrichtung vorgehalten werden. Damit ist es möglich, wie beim ETCS-Standard sogar vorgeschrieben, dass jede einzelne Balise nur ein einzelnes codegesichertes Telegramm aussendet, was üblicherweise mehrfach wiederholt wird. In Abhängigkeit vom anstehenden Signalbegriff erfolgt die Anwahl der Telegramme allein in der Balise, also ohne Rechner, mit sicherungstechnischer Qualität, d. h. Fehler führen hier sicher zu solchen Verfälschungen des gesendeten Telegramms, dass das Fahrzeug den Fehler sicher erkennt und als Folge eine entsprechende sicherungstechnische Reaktion ausführt. Diese kann darin bestehen, dass das Telegramm verworfen wird; genauso gut kann auch eine Bremsung ausgelöst werden. In jedem Falle erfolgt bei einem codefalschen Telegramm die vorgegebene sicherungstechnische Reaktion.

Zur Erhöhung der Sicherheit wird vorgeschlagen, dass jedes Teiltelegramm in voneinander unabhängigen Speichern/Speicherbereichen abgelegt ist.

Technisch einfacher ist es, wenn der Signalbegriff mittels eines Signalcoders direkt am Signal in einen Anschaltcode umgewandelt wird.

Wird der Signalcoder als passiver Adapter ausgebildet, so kommt man ohne externe Stromzufuhr aus.

Einfacher ist es, wenn der Anschaltcode zur Auswahl der Teiltelegramme an den Speicher / die Speicherbereiche anlegbar ist.

Um Fehler während des Sendens der Telegramme zu vermeiden, wird vorgeschlagen, dass der Anschaltcode für die Dauer des Aussendens gespeichert wird (englisch: latch).

Kostengünstiger ist es, wenn die Teiltelegramme von der Sendeeinrichtung aus dem Speicher / den Speicherbereichen ausgelesen, zusammengesetzt und gesendet werden.

Eine vorteilhafte Ausgestaltung sieht vor, dass die Teiltelegramme unmittelbar hintereinander gesendet werden, so dass sie ein vollständiges Telegramm ergeben.

Da die Adressierung mittels des Anschaltcodes fehlerhaft sein kann, wird vorgeschlagen, dass die Teiltelegramme derart nach sicherungstechnischem Prinzip gebildet werden, dass bei Zusammensetzung fehlerhafter Teiltelegramme nur codefalsche Telegramme gebildet werden.

Die Sicherheit lässt sich erhöhen, wenn ein gültiges Telegramm nur aus allen zu einem Signalbegriff gehörenden Telegrammteilen gebildet werden kann.

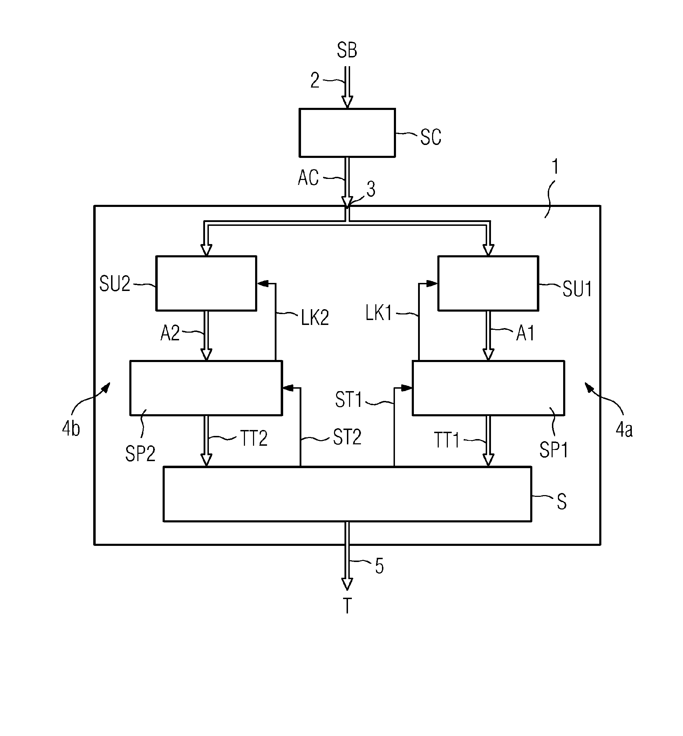

Die Erfindung wird nachfolgend anhand einer Zeichnung näher beschrieben, dessen einzige Figur ein Blockschaltbild einer Balise (Sendeeinrichtung) eines Bahnsystems zeigt.

Das Bahnsystems weist eine Vielzahl von mit Signalen versehenen Fahrstrecken auf (nicht gezeigt), entlang derer sich Fahrzeuge (Züge) bewegen.

An den Fahrstrecken sind zur sicheren Steuerung der Fahrzeuge Balisen als wegseitige Sendeeinrichtungen 1 fest angeordnet.
Ein im Signalstromkreis eines Signals abgegriffener aktueller Signalbegriff SB wird dabei an einen der Balise vorgeschalteten Signalcoder SC, der als passiver Adapter ausgebildet ist, angelegt, was durch den Pfeil 2 in der Zeichnung schematisch dargestellt ist. (Selbstverständlich könnte der Signalbegriff SB auch von einem Stellwerk übermittelt worden sein.) Der Signalcoder SC erzeugt daraus einen sicheren Anschaltcode AC, der anschließend am Eingang 3 der Balise anliegt. Dieser gesicherte Anschaltcode AC wird anschließend in einer durchgängig zweikanaligen Struktur weiter verarbeitet.

Alternativ kann der Signalcoder SC auch durchgängig zweikanalig aufgebaut sein.

Jeder der beiden Kanäle 4a, 4b verfügt über einen Telegrammspeicher SP1, SP2, die beide voneinander unabhängig sind.

Wie die Figur zeigt, sind den beiden unabhängigen Speichern SP1, SP2 jeweils Signalcodeumsetzer SU1, SU2 vorgeschaltet, welche den Anschaltcode AC in eine Adresse A1, A2 umsetzen, die nach ihrer Generierung am jeweils zugehörigen Telegrammspeicher SP1, SP2 anliegen. Entsprechend der Adresse A1, A2 wird vom Telegrammspeicher SP1, SP2 ein Telegrammteil TT1, TT2 ausgegeben.

Die beiden Telegrammteile TT1, TT2 ergeben hintereinander geschrieben, also zuerst TT1 und dann TT2 ein vollständiges Telegramm T, das zu dem aktuell anliegenden Signalbegriff SB gehört.

Die Telegrammteile TT1, TT2 sind derart nach sicherungstechnischen Prinzipien gebildet, dass bei Zusammensetzung der Telegrammteile TT1, TT2 bei falscher Adressierung, also eine der Adressen A1, A2 ist fehlerhaft, nur codefalsche Telegramme gebildet werden.

Ein in der Balise vorhandener Sender S hat Zugriff auf beide Speicher SP1, SP2 und ist zum wechselweisen Zugriff mit einer entsprechenden Wechselsteuerung mit entsprechender Ausgabe von Steuertakten ST1, ST2 ausgestattet.

Der Anschaltcode AC zur Auswahl der Adressen A1, A2 muss für die Dauer der Generierung eines Telegramms T gespeichert (englisch: latch) bleiben, was hier durch ein von den Speichern SP1, SP2 zurückgeführtes Kommando LK1, LK2 sichergestellt wird (der Anschaltcode AC wird so für die Dauer der Aussendung des Telegramms T gespeichert).

Vom Sender S werden die Telegrammteile TT1, TT2 so sicher aus den beiden Speichern SP1, SP2 ausgelesen, zusammengesetzt und dann als vollständiges Telegramm T gesendet. Das Aussenden des Telegramms ist in der Figur durch den Pfeil 5 schematisch dargestellt.

Ein Telegramms T kann grundsätzlich auch aus mehr als zwei Telegrammteile TT1, TT2 gebildet werden. In diesem Fall ist sicherzustellen, dass nur aus allen zu einem Signalbegriff SB gehörenden Telegrammteilen TT1, TT2 usw. ein gültiges Telegramm T gebildet werden kann.

## Patentansprüche

1. System, insbesondere Bahnsystem, mit sich entlang einer Fahrstrecke bewegenden Fahrzeugen, an der wegseitige Sendeeinrichtungen (1), insbesondere in Form von Balisen, fest angeordnet sind, die zur sicheren Steuerung der Fahrzeuge jeweils abhängig von einem Signalbegriff (SB) Datensätze in Form von Telegrammen (T) an die Fahrzeuge übertragen, welche Nutzdaten und einen Anhang zur Codesicherung umfassen, wobei die Sendeeinrichtung (1) das entsprechende Telegramm (T) jeweils beim Passieren eines Fahrzeugs an das Fahrzeug überträgt, welches die Integrität des übertragenen Telegramms (T) anhand des Anhangs zur Codesicherung überprüft, nur coderichtige Telegramme (T) akzeptiert und bei codefalschen Telegrammen (T) eine sicherungstechnische Reaktion auslöst,
**dadurch gekennzeichnet,**
**dass** das Telegramm (T) von der Sendeeinrichtung (1) aus mindestens zwei unabhängigen Telegrammteilen (TT1, TT2) zusammengesetzt wird, die dazu für jeden Signalbegriff (SB) in der Sendeeinrichtung (1) vorgehalten werden.

2. System nach Anspruch 1,
**dadurch gekennzeichnet,**
**dass** jeder Telegrammteil (TT1, TT2) in voneinander unabhängigen Speichern (SP1, SP2)/ Speicherbereichen abgelegt ist.

3. System nach Anspruch 1 oder 2,
**dadurch gekennzeichnet,**
**dass** der Signalbegriff (SB) mittels eines Signalcoders (SC) in einen Anschaltcode (AC) umgewandelt wird.

4. System nach Anspruch 3,
**dadurch gekennzeichnet,**
**dass** der Signalcoder (SC) als passiver Adapter ausgebildet ist.

5. System nach Anspruch 2,
**dadurch gekennzeichnet,**
**dass** der Anschaltcode (AC) zur Auswahl der Telegrammteile (TT1, TT2) an den Speicher (SP1, SP2)/ die Speicherbereiche angelegt wird.

6. System nach Anspruch 5,
**dadurch gekennzeichnet,**
**dass** der Anschaltcode (AC) für die Dauer der Aussendung eines Telegramms (T) gespeichert wird.

7. System nach einem der Ansprüche 2 - 6,
**dadurch gekennzeichnet,**
**dass** die Telegrammteile (TT1, TT2) von der Sendeeinrichtung (1) aus dem Speicher (SP1, SP2)/ den Speicherbereichen ausgelesen, zusammengesetzt und gesendet werden.

8. System nach einem der Ansprüche 1 - 7,
**dadurch gekennzeichnet,**
**dass** die Telegrammteile (TT1, TT2) unmittelbar hintereinander gesendet werden, so dass sie ein vollständiges Telegramm (T) bilden.

9. System nach einem der Ansprüche 2 - 8,
**dadurch gekennzeichnet,**
**dass** bei anteilig falscher Adressierung des Speichers (SP1, SP2)/ der Speicherbereiche die Telegrammteile (TT1, TT2) derart nach sicherungstechnischen Prinzipien gebildet sind, dass bei Zusammensetzung der Telegrammteile (TT1, TT2) nur codefalsche Telegramme (T) gebildet werden.

10. System nach einem der Ansprüche 1 - 9,
**dadurch gekennzeichnet,**
**dass** jeweils nur aus allen zu einem Signalbegriff (SB) gehörenden Telegrammteilen (TT1, TT2, ...) ein gültiges Telegramm (T) gebildet werden kann.

11. Verfahren zur sicheren Steuerung von Fahrzeugen, insbesondere eines Bahnsystems, die sich entlang einer Fahrstrecke bewegen, an der wegseitige Sendeeinrichtungen (1), insbesondere in Form von Balisen, fest angeordnet sind,
welche an die Fahrzeuge jeweils abhängig von einem Signalbegriff (SB) Datensätze in Form von Telegrammen (T) übertragen, die wiederum Nutzdaten und einen Anhang zur Codesicherung umfassen,
bei dem die Sendeeinrichtung (1) das entsprechende Telegramm (T) jeweils beim Passieren eines Fahrzeugs an dieses Fahrzeug überträgt, welches die Integrität des übertragenen Telegramms (T) anhand des Anhangs zur Codesicherung überprüft, coderichtige Telegramme (T) akzeptiert und bei codefalschen Telegrammen (T) eine sicherungstechnische Reaktion auslöst,
**dadurch gekennzeichnet,**
**dass** das Telegramm (T) von der Sendeeinrichtung (1) aus mindestens zwei unabhängigen Telegrammteilen (TT1, TT2) zusammengesetzt wird, die dazu für jeden Signalbegriff (SB) in der Sendeeinrichtung (1) vorgehalten werden.
